# EUROPEAN PATENT APPLICATION

(11) **EP 0 926 702 A2**
(43) Date of publication of application: **30.06.1999**
(21) Application number: 98310344.1
(22) Date of filing: 16.12.1998
(51) Int. Cl.: H01J 61/30

(54) **Glass body for compact fluorescent lamp and compact fluorescent lamp constructed therewith**

(30) Priority: 23.12.1997 HU 9702535; 08.10.1998 HU 9802273
(71) Applicant: GENERAL ELECTRIC COMPANY, Schenectady, NY 12345 (US)
(72) Inventor: Antal, Kalman, 1151 Budapest (HU); Fulop, Jozsef, 1148 Budapest (HU); Bankuti, Laszlo, 1046 Budapest (HU); Wursching, Istvan, 1051 Budapest (HU)
(74) Representative: Goode, Ian Roy

(57) **Abstract**

This invention relates to a glass body for a compact fluorescent lamp, which includes substantially parallel body tubes (4,5) connected in series by their inner spaces. The glass body identifies domes (12) and is provided with at least one exhaust tube (10). Among the body tubes connected in series, each outermost body tube has current inleads (16). The glass body consists of at least one part, the body tubes (4,5) of which are connected to each other by tube arcs (8) of angle 180°. The free ends (6) of the outer body tubes (4) of the part are sealed, and its inner body tubes (5) at their ends opposite to the domes (12) extend beyond the sealed ends of the two outer body tubes (4). In the compact fluorescent lamp, the glass body is supported by a cap of a housing (18), and the inner body tubes (5) of the glass body part at their ends opposite to the domes (12) of the glass body extend beyond the sealed ends of the two outer body tubes (4) of the glass body part by the side of the housing (1 8).

## Description

This invention relates to a so called glass body for a compact fluorescent lamp, and, more particularly, to the structure of the glass body which is an envelope of the discharge tube of the compact fluorescent lamp.

A compact fluorescent lamp having a glass body of this kind is disclosed in US Patent No. 4,337,414. In this known solution, the housing comprising the ballast circuit producing the voltage for the operation of the lamp from the mains voltage slightly protrudes beyond the enveloping circle of the glass body on each side when viewed from the top. This has the consequence that a substantial portion of the lighting surface of the glass body, primarily the lower part of the tube arcs of angle 180°, is covered by the housing which limits the space angle of the emitted light and, in addition, the light emitted towards the base is lost, thus the lumen efficiency of the compact fluorescent lamp is relatively poor.

Thus there is a particular need for a glass body for a compact fluorescent lamp which discloses a larger surface area of the compact fluorescent lamp for light emission, and thus permits widening of the space angle of the emitted light which, in turn, results in an increased lumen efficiency.

According to a first aspect of the invention, a glass body for a compact fluorescent lamp is provided, which includes substantially parallel body tubes connected in series by their inner spaces. The glass body identifies domes and is provided with at least one exhaust tube. Among the body tubes connected in series, each outermost body tube has current inleads. The glass body consists of at least one part, the body tubes of which are connected to each other by tube arcs of angle 180°. The free ends of the outer body tubes of the part are sealed, and its inner body tubes at their ends opposite to the domes extend beyond the sealed ends of the two outer body tubes.

In accordance with another aspect of the invention, a compact fluorescent lamp is provided, the glass body of which is supported by a cap of a housing, and the inner body tubes of the glass body part at their ends opposite to the domes of the glass body extend beyond the sealed ends of the two outer body tubes of the glass body part by the side of the housing.

Using this glass body construction in a compact fluorescent lamp has the effect that only the free ends of the outer body tubes are fixed in a cap of a housing supporting the glass body, and the longer inner body tubes extend beyond the housing by its side, so that this extending part of the glass body is not covered by the housing. Consequently, the emitted light is more than that of the known compact fluorescent lamps which results in increased lumen efficiency in the case of the compact fluorescent lamp according to the invention.

As a further advantage of the glass body according to the invention, the glass body parts are suitable for connection in series. This permits the construction of glass bodies with various shapes and numbers of body tubes which results in compact fluorescent lamps with various wattage and lumen output.

The glass body according to the invention and the compact fluorescent lamp constructed with such a glass body will be described in detail by means of embodiments shown also in drawings, where
- Fig. 1: is a possible embodiment of a part of the glass body,
- Fig. 2: is another possible embodiment of a part of the glass body,
- Fig. 3: is a possible embodiment of the glass body consisting of a single part,
- Fig. 4: illustrates a view of a glass body, in which the present invention is embodied, developed in a plane,
- Fig. 5: is the bottom view of a glass body with eight body tubes, and
- Fig. 6: shows a side and partly sectional view of a compact fluorescent lamp comprising a glass body which is placed and fixed in a housing.

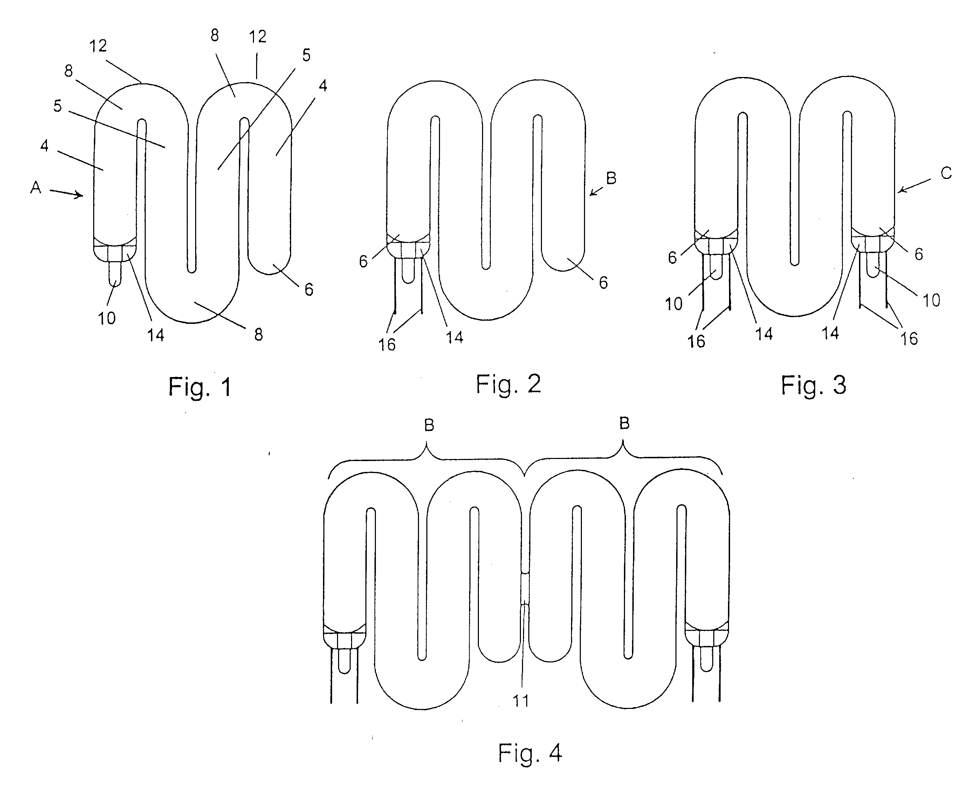

Fig. 1 shows the shape of a part A of a glass body developed in a plane. This part A representing an essential feature of the invention is an element from which glass bodies with various sizes and shapes can be formed.

The part A of the glass body consists of four substantially parallel body tubes, of which the two outer body tubes 4 and the two inner body tubes 5 are connected in series with each other through tube arcs 8 of angle 180°. In the embodiment seen in Fig. 1, domes 12 made by the upper portions of tube arcs 8 of angle 180° connecting the outer body tubes 4 to the inner body tubes 5 are substantially the same height. The glass body, in which the present invention is embodied, can also be constructed with parts in which the domes 12 are of different heights. At the bottom of the part A of the glass body, the lower end of the tube arcs of angle 180° connecting the inner body tubes 5 extends beyond the adjacent free ends 6 of the outer body tubes 4 which are sealed. In order that several glass body parts can be connected in series by bridges, an exhaust tube 10 is embedded in a seal 14 of the free end 6 of one outer body tube 4. This exhaust tube 10 is used for making bridges 11 between glass body parts of similar or identical type. The glass bridges are made by simultaneously blowing out a hole after heating the place of this hole near the lower end of two adjacent outer body tubes 4 and fusing them together. To blow out a hole on each outer body tube 4 of the glass body part *A*, an exhaust tube 10 being embedded in the seal 14 of one outer body tube 4 is sufficient, however exhaust tubes 10 being embedded in the seals of both outer body tubes 4 facilitate bridge making.

The part *A* of the glass body seen in Fig. 1 is a form developed in a plane which can also be arranged in a non-planar form when constructing a compact fluorescent lamp. So, e.g. a regular polygonal form can also be made from the part A while the body tubes 4 and 5 remain substantially parallel to each other.

In Fig. 2, a part *B* of the glass body is shown which is similar to the part A shown in Fig. 1 with the difference that a seal 14 with embedded current inleads 16 is formed at the free end 6 of one of the outer body tubes 4. Disregarding this, the part *B* shown in Fig. 2 is identical with the part A illustrated in Fig 1.

Either the part *A* or the part *B* of the glass body of the compact fluorescent lamp shown in Figs. 1 and 2, is suitable in itself for constructing a compact fluorescent lamp if it has exhaust tubes 10 as well as current inleads 16 and electrodes connected thereto inside the glass body at both its free ends 6. The part *C* shown in Fig. 3 is a glass body consisting of a single element which is suitable in itself for constructing a compact fluorescent lamp. In addition to the exhaust tube 10, current inleads 16 are also embedded in the seals 14 of both outer body tubes 14 of the part *C*. The two exhaust tubes are used also for rinsing the glass body, details of which are known in the art.

A compact fluorescent lamp with twelve body tubes can be constructed by connecting the outer body tubes 4 of two elements of the part *B* shown in Fig. 2 to each outer body tube 4 of one element of the part *A* shown in Fig. 1 through bridges 11.

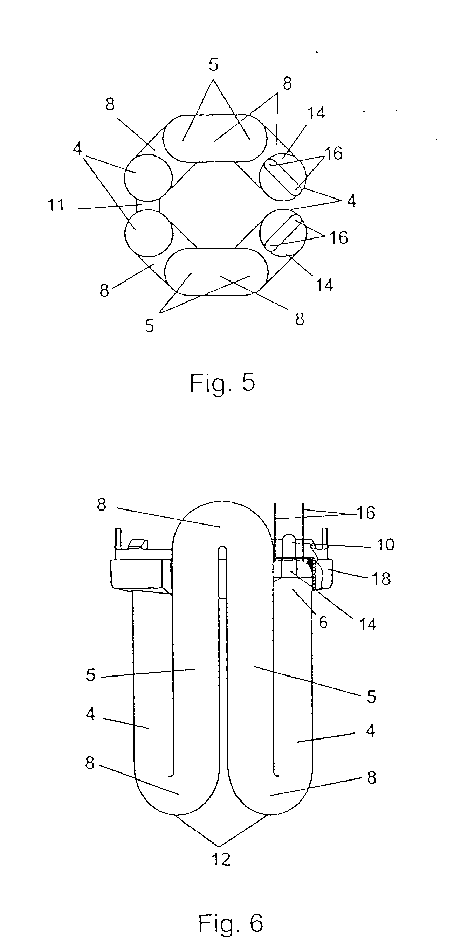

In Fig. 4, the glass body of a compact fluorescent lamp with eight body tubes is seen developed in a plane, in which two elements of the part *B* shown in Fig. 2 are connected in series through a bridge 11. The arrangement developed in a plane in Fig. 4 can also be arranged in space in an octagonal form, while the body tubes remain substantially parallel to each other. The bottom view of such an arrangement seen from the seal 14 is shown in Fig. 5 where the reference numbers denoting identical elements are identical with those used in Figs. 1 and 2.

Fig. 6 is a side view of the glass body shown in bottom view in Fig. 5, however the glass body is placed in a housing 18. It is clearly seen in this figure that the tube arc of angle 180° connecting the inner body tubes 5 extends beyond the housing 18 by the side thereof and so, in contrast to the construction disclosed in US Patent No. 4,337,414, this part of the fluorescent lamp is not covered by the housing of the compact fluorescent lamp. The light emitted is larger and the lumen efficiency of the compact fluorescent lamp is increased with respect to the lamp belonging to the prior art.

Of course, using the parts *A* and *B* according to Figs. 1 and 2, respectively, a compact fluorescent lamp of other construction can also be made. So, in the arrangements according to Figs. 4 through 6, one or more parts A shown in Fig. 1 can be inserted between two parts *B* shown in Fig. 2 which results in a fluorescent lamp of larger lighting surface. It is by no means necessary to arrange the body tubes in the form of either a regular or an irregular polygon. For some special purposes, parts *A* and *B* can be arranged either in line or in two planes substantially parallel to each other.

## Claims

1. A glass body for a compact fluorescent lamp including substantially parallel body tubes (4,5) connected in series by the inner spaces thereof, wherein said glass body identifies domes (12) and is provided with at least one exhaust tube (10), the body tubes are connected in series and at least one outermost body tube (14) has current inleads (16), said glass body consists of at least one part (*A*, *B,* C), the body tubes (4, 5) of which are connected to each other by tube arcs (8) of angle 180', the free ends (6) of the outer body tubes (4) of said part (*A, B,* C) are sealed, and the inner body tubes (5) of said part (*A*, *B,* C) at their ends opposite to said domes (12) extend beyond the sealed ends of the two outer body tubes (4).

2. The glass body of claim 1 in which an exhaust tube (10) is embedded in the seal (14) of at least one of the outer body tubes (4) of said part *(A, B),* and two adjacent said parts *(A, B)* are connected in series by a bridge (11) constructed between the outer body tubes (4) of said parts.

3. The glass body of claim 1 in which an exhaust tube (10) and current inleads (16) are embedded in the seal (14) of one outer body tube (4) of said part (B).

4. The glass body of claim 1 in which an exhaust tube (10) and current inleads (16) are embedded in the seal (14) of each outer body tube (4) of said part (C).

5. The glass body of claim 1 in which one outer body tube (4) of said part (B) is connected to an adjacent said part (A, B) by a bridge (11), while the other outer body tube (4) of said part (B) is provided with an exhaust tube (10) and current inleads (16) are embedded in the seal (14) thereof.

6. A compact fluorescent lamp including a housing (18) which supports a glass body in accordance with any one of claims 1 to 5, the portions of the inner body tubes (5) of said part (A, B, C) at their ends opposite to said domes (12) which extend beyond the sealed ends of the two outer body tubes (4) extending by the side of the housing (18).
